# EUROPEAN PATENT APPLICATION

(11) **EP 1 354 621 A1**
(43) Date of publication of application: **22.10.2003**
(21) Application number: 02007862.2
(22) Date of filing: 08.04.2002
(51) Int. Cl.: B01D 61/18

(54) **Filter module for micro filtration with replaceable micro-sieve and method for assembling a filter module**

(71) Applicant: TUCHENHAGEN GmbH, 21514 Büchen (DE)
(72) Inventor: Carlsen, Geir Arne, 6640 Lunderskov (DK)
(74) Representative: Kahlhöfer, Hermann, Dipl.-Phys.

(57) **Abstract**

The invention refers to a filter module (1) for micro-filtration of fluids, in particular for micro-filtration of liquids, such as fermented liquids, comprising a micro-sieve (2), a first support (7) for supporting the micro-sieve (2) and guiding the fluid to the micro-sieve (2), and a second support (8) for covering the micro-sieve (2) and for collecting the fluid after having passed the micro-sieve (2), wherein the micro-sieve (2) is sandwiched between the first (7) and the second (8) support so as to establish fluid conducting connections between the three parts (2, 7, 8) and to seal them against loss of fluid, wherein the micro-sieve (2) is detachably hold between the first (7) and second (8) support only by a clamping force. It is preferred that the first (7) and/or the second (8) support comprises an elastic planar contact surface (3). The invention also concerns a method for assembling a filter module (2) under clean conditions to avoid particles on the contact surfaces. The invention allows to use micro-sieves (2) without gluing them to a support (7) by clamping them without local pressure zones that would cause the micro-sieve (2) to break.

## Description

The present invention relates to a filter module for micro filtration, in particular for micro filtration of liquids, comprising a micro-sieve and supports for holding the micro-sieve, as well as a method for assembling such a filter module.

From WO 96/08036 A1 it is known how to produce micromechanical structures by means of reactive etching. The present invention is dealing with micro-sieves, which can be produced for example by such methods. In WO 93/23154 A1 or WO 95/13860A1 special structures of such micro-sieves and their supports are described. Moreover, from EP 0 879 635 A1 it is known to use micro-sieves for the filtration of liquids, in particular of fermented liquids such as beer to separate the liquid from suspended particles such as yeast cells. This document also shows general designs how to arrange such micro-sieves between supporting structures, which also contain channel systems to guide a fluid to the sieve and to collect the fluid after having passed the sieve. It also contains an arrangement of several sieves in a column and shows how a channeling system can be arranged to establish a cross flow filtration situation in the column. Micro filtration uses filtering layers, i.e. micro-sieves, with pores having at least practically equal size of a maximum of about 2 µm (Micron), preferably smaller than 1 µm. Such micro-sieves are formed making use of photolithographic techniques and are usually made from a wafer of a semiconductor such as silicon or silicon nitride.

Such micro-sieves can be used for dead end filtration where the liquid for filtering is herein guided in its entirety through the filter, wherein particles in the liquid which are too large remain behind, in, or on the filter. Another use of such micro-sieves is for so called cross flow filtration where a main flow of the liquid for filtering is guided along the filter instead of through it and due to a pressure difference applied over both sides of the filter a part of the liquid flow passed will nevertheless penetrate through the filter and can be drained as clean permeate. The remaining part of the liquid for filtering will again be mixed with the liquid still to be filtered and is guided repeatedly over the filter so that a small part of the original amount of liquid is therefore eventually left over having a high concentration of contaminants. An example for such a device is described in EP 0 879 635 A1.

A common problem being encountered using micro-sieves are the considerable costs when a micro-sieve needs to be replaced. Because of the fragility of the micro-sieve, which is usually made from semiconductors that tend to be brittle, the micro-sieve had to be glued or bonded, especially anodically bonded, to a supporting structure that supports the micro-sieve. The supporting structure needs channels of more or less complicated design to guide the fluid and is expensive to manufacture. Usually such supports are made of glass, since the mechanical properties like thermal expansion coefficient of semiconductors and glass are similar, and the micro-sieve is glued or bonded to the support so as to prevent the micro-sieve from breaking. Although such micro-sieves usually can be operated under almost constant temperature, they must be able for many applications to withstand a cleaning process during which they are heated up. Therefore no alternatives to gluing or bonding the micro-sieves to glass supports were considered so far.

It is important that both the micro-sieve and the support do not interact with the liquid to be filtered. For food applications they must not be harmful or release harmful components to the consumer of the food. It is also important that the micro-sieve and the support can be cleaned easily and that they can be used for certain time periods to be installed in technical machines.

As the micro-sieve had to be glued or bonded to the support, whenever the micro-sieve needed to be replaced, the support had mostly to be replaced, too. Moreover, up to the present there was no solution known how to avoid the problem of the breaking of the micro-sieve when mounting the micro-sieve if it was not glued or bonded to the support.

It is therefore object of the present invention to overcome the draw backs of the state of the art and to provide a filter module where the micro-sieve can be mounted, again separated and replaced easily with low costs although that the micro-sieve does not break when being mounted or being under operation and to provide a method with which the filter module can be assembled with comparatively low costs so that the micro-sieve does not break.

Moreover, it is an object of the invention to provide a filter module that can be used for food applications and can be used on a technical scale.

In order to achieve these stated objects, according to the invention a filter module with features according to claim 1 and a method with features according to claim 20 are provided. Further advantageous embodiments that can be applied individually or can be combined with one another arbitrarily are given by the respective depending claims.

The filter module according to the invention for micro filtration, in particular for micro filtration of liquids comprises a micro-sieve, a first support for supporting the micro-sieve and guiding the fluid to the micro-sieve, and a second support for covering the micro-sieve and for collecting the fluid after having passed the micro-sieve, wherein the micro-sieve is sandwiched between the first and the second support so as to establish fluid conducting connections between the three parts and to seal them against loss of fluid, wherein the micro-sieve is detachably hold between the first and second support only by a clamping force. One important point to allow such a clamping without destroying the micro-sieves is that the contact surfaces are free of foreign particles, what can be achieved by clean conditions during the manufacturing process. Another point is to distribute the clamping force as homogenously as possible over the area of the micro-sieve. This can be done by using stiff supports, which nevertheless have some elasticity at their contact surfaces.

Therefore the first and/or the second support preferably comprise an elastic contact surface, either as a separate layer or by a coating or by being made themselves of a stiff, but elastic material as plastics. Due to the clamping force the micro-sieve is fixed securely. A uniform pressure of the micro-sieve against the elastic planar contact surface prevents the micro-sieve from breaking, as local pressure zones in the micro-sieves are avoided by the elastic contact surface acting as elastic mattress for the micro-sieve. Moreover the elastic contact surface helps to seal the different channels in the supporting structures from each other. Additional sealing rings can be used to completely seal the system so that liquid to be filtered is prevented from circumventing the micro-sieve reaching to the permeate side of the micro-sieve without being filtered. Also leakage of the system can be avoided by additional sealing means if so required.

The filter module according to the invention is in principle suitable for all liquids to be filtered such as liquids obtained after a fermentation process or other processes where small particles need to be separated from a liquid. Such fermentation processes are used not only to prepare alcoholic drinks such as beers and wines but also find application in the biochemical and pharmaceutical industry for preparation of for instance drugs such as insulin. In all these cases, and particularly in the latter applications the permeate must not only be free of yeast cells but also of bacteria. The filter module may also be applied for purposes of sterilization. In such cases it is advantageous that the micro-sieve has pores having a size smaller than 0.5 µm, in particular between 0.25 µm and 0.5 µm.

Thus owing to the extremely close pore pitch distribution, it is possible with such a filter to remove in one operation from the starting liquid both the yeast cells remaining in a fermented liquid and bacteria, which are normally larger than 0.5 µm.

To increase the filter flux in a process it is advantageous to use several filter modules, in particular arranged in a column, which are connected in parallel. However, it is also possible to arrange a plurality of filter modules in series, what is especially advantageous with micro-sieves of decreasing pore sizes. Such an arrangement allows separating of particles of different sizes and also results in a higher filtration performance.

The micro-sieve itself is produced preferably by lithographic methods. It is advantageous if the micro-sieve has a thickness which is smaller than the average pore diameter so that the pores are actually openings instead of thin channels, which limits the risk of irreversible blockage with small particles such as yeast cells. Furthermore, the transversal resistance of the filter can thus remain exceptionally low, this being expressed in the extremely high flux which can be obtained with a filter according to the invention.

The micro-sieve has advantageously at least on its side directed towards the entrance opening an at least practically flat surface with height variations smaller than 100 nm. Such a smooth surface roughness can be realized by the lithographic/etching manufacturing process. The adhesion of solid constituents being in the liquid to be filtered can thus be limited to an absolute minimum, whereby not only the filter can be operated for a period of time without interim cleaning but also an ideal flow is achieved along the filter surface from which clean permeate can be extracted with a relatively large flux.

Due to the flat dimensions of the micro-sieve, the micro-sieve needs to be supported. Even though the micro-sieve may comprise supporting structures so as to guarantee a minimum self-stability, the support is necessary to receive the forces caused by the pressure difference of the fluid across the micro-sieve. A support usually comprises a number of ribs or other kinds of projections being able to support or carry the micro-sieve. Sometimes the support is made of a plate that comprises a number of groves, channels and/or holes through which the fluid can flow. Due to their comparatively complex structure, such supports are expensive to manufacture. Using a filter module according to the invention, such supports may now be used several times after replacement of the micro-sieve and their cost may be saved.

The micro-sieve and the supports can preferably be clamped together by clamping means, which interconnect the first and the second support. The liquid to be filtered enters the filter module through at least one entrance opening of the first support. The filtered liquid (permeate) exits the filter module through at least one second exit opening of the second support. The connection between the micro-sieve and the support is realized glue-free using a contact surface and the micro-sieve is detachably connected to the support by clamping. As glue is not used for connecting the micro-sieve with the support, the support may be re-used after replacing the micro-sieve. Thus the micro-sieve may be replaced individually and expenses for the support are saved.

In an embodiment of the invention the support is made completely of plastics. Such supports may be manufactured by injection molding, grinding or other common manufacturing techniques. They may be made with help of a two component technique in order to use the different elasticities of the two plastics. They tend to be more voluminous in comparison with supports of a compound design using steel and plastics.

Therefore another preferred embodiment is the use of metal, in particular stainless steel for the supports. To establish a certain elasticity at the surface of such steel supports, they are at least partially covered or coated by an elastic material such as molded rubber. In another embodiment separate intermediate elastic layers are used. A metal core of such a compound support at least provides reinforcement structures, which give the supports enough stiffness to avoid deformation during the manufacturing process and operation. The elastic surface allows uniform distribution of the clamping force over the area of the micro-sieve and can compensate small differences in the thermal expansion of the micro-sieve and the supports.

Advantageously the contact surface is made of plastics. Plastics to be used may be polymers such as polyoximethylen. Such materials are stiff and strong enough to cope with typical forces encountered in such filter modules, but provide the necessary slight elasticity. They are durable and dimensionally stable at elevated temperatures. Such polymers have a tensile strength (Deutsche Industrie Norm - DIN 53455) between 50 to 80 N/mm², an modulus for elasticity (for tension, DIN 53457) between 2900 and 3500 N/mm², a ball Indentation hardness (DIN 53456) between 130 and 190 N/mm², and a bending strength (DIN 53 452) between 100 and 140 N/mm².

For food applications it is important that the materials being used are not harmful for the consumer and do not influence the product to be produced.

The support may contain reinforcement structures, preferably made of metal, in particular of steel. Such reinforcement structures make sure that the support is stiff enough to carry reliably the micro-sieve even at peak pressures of the fluid. Common diameters of the support range between 50 mm and 300 mm and pressures being applied across the micro-sieve range between 0.1 bars to 8 bars, preferably between 1 and 3 bars.

In an advantageous embodiment of the filter module according to the invention the first and/or second support comprises a multiplicity of supporting ribs that are arranged in spaced relationship with distances smaller than 15 mm, in particular smaller than 12 mm, preferably smaller than 9 mm. Such a close spacing of the ribs assures a secure support of the micro-sieve. The fluid permeable support may also comprise other fluid distributing or collecting structures, such as orifices, openings, holes, groves, or channels with one dimension being smaller than 18 mm, in particular smaller than 15 mm, preferably smaller than 12 mm. The smaller the distances between the ribs respectively the smaller the dimensions of the structures the higher pressure gradients across the micro-sieve will be able to be handled by the micro-sieve without its breakage. For cross filtration processes, a filter module with a support being provided with ribs is preferred.

It is advantageous when the elastic planar contact layer has a thickness of more than 0,01 mm, in particular more than 0,03 mm. Preferably the support is made at least partially from metal, in particular from stainless steel. The support being made at least partially from metal is highly durable and dimensionally stable. The elastic planar contact layer prevents the micro-sieve from breaking as it acts as elastic bed on which the micro-sieve rests. Thus local pressure zones in the micro-sieves are avoided that could lead to breakage of the micro-sieves. Similarly the contact surface is advantageously provided with elastic material so as to function as elastic bed for the micro-sieve reducing local pressure zones in the micro-sieve avoiding the micro-sieve from breaking.

In a further advantageous embodiment of the filter module according to the invention, the elastic planar contact surface is made of an elastic material, in particular a polymer having a compressibility of less than 70 x 10⁹ N/m², in particular less than 20 x 10⁹ N/m², preferably less than 10 x 10⁹ N/m². Such a contact surface forms an elastic, flexible bed for the micro-sieve. It prevents the micro-sieve from breaking and additionally helps to seal the fluid guiding structures from each other. This alone or with the additional use of sealing rings makes sure that liquid to be filtered cannot circumvent the micro-sieve and reach the opposite side of the micro-sieve polluting the already filtered liquid.

The filter module according to the invention may be used for dead-end filtration but may also be applied in cross flow applications. For cross flow applications the first support has to comprise at least one additional first exit opening.

In a specific embodiment of the filter module according to the invention the first and the second support are symmetrical which is very practical for production and for example in the case when the filter module is cleaned by a back-pulse. In such cases the permeate flow is reversed and the micro-sieve is cleaned by the clean, filtered liquid. In case of a back-pulse the micro-sieve is alternatingly supported by both supports and it is favorable when the first and the second support are symmetrical as well as their respective contact surfaces.

The method for assembling a filter module for micro-filtration of fluids, in particular for micro-filtration of liquids according to the invention comprises a micro-sieve, a first support for supporting the micro-sieve and guiding the fluid to the micro-sieve, and a second support for covering the micro-sieve and for collecting the fluid after having passed the micro-sieve, wherein the micro-sieve is sandwiched between the first and the second support so as to establish fluid conducting connections between the three parts and to seal the system against loss of fluid, wherein the micro-sieve is detachably hold between the first and second support only by applying a clamping force, and wherein the assembling takes place under clean conditions, preferably in a clean room, to avoid foreign particles between the contact surfaces of the micro-sieve and the first and second support.

Clean rooms are common for instance in semiconductor technology such as in the wafer production technology. A clean room is characterized by a reduced level of contaminants, in particular dust particles. Such rooms are used for the manufacture or assembly of objects (as precision parts) where at a high level of cleanness is maintained by special means. According to the US federal standard 2 09E a clean room of class 100.000 corresponds to the air in the environment. It is advantageous if the clean room is of class 100 to 1.000 so that the number of particles having a size greater than 0.5 µm/cft is less than 1.000.

According to an advantageous embodiment of the method according to the invention the micro-sieve is detachably connected to the support by an elastic planar contact surface. In the clean environment given by the clean room the dust particle concentration is reduced, so that the probability that a dust particle between the contact surface and the micro-sieve would induce local stresses in the micro-sieve is reduced. This measure reduces the probability that the micro-sieve breaks.

The invention is illustrated in the following with respect to the drawings which demonstrate the invention exemplarily and are not meant to restrict the spirit of the invention. In the drawings it is shown schematically:
Fig. 1 a schematic longitudinal section view of a column of filter modules,
Fig. 2 an example for a first support of a filter module for cross flow filtration in perspective view from above,
Fig. 3 the support of the filter module according to Fig. 2 in perspective view from below,
Fig. 4 the support according to Fig. 2 in top view, and
Fig. 5 the support according to Fig. 2 in bottom view.

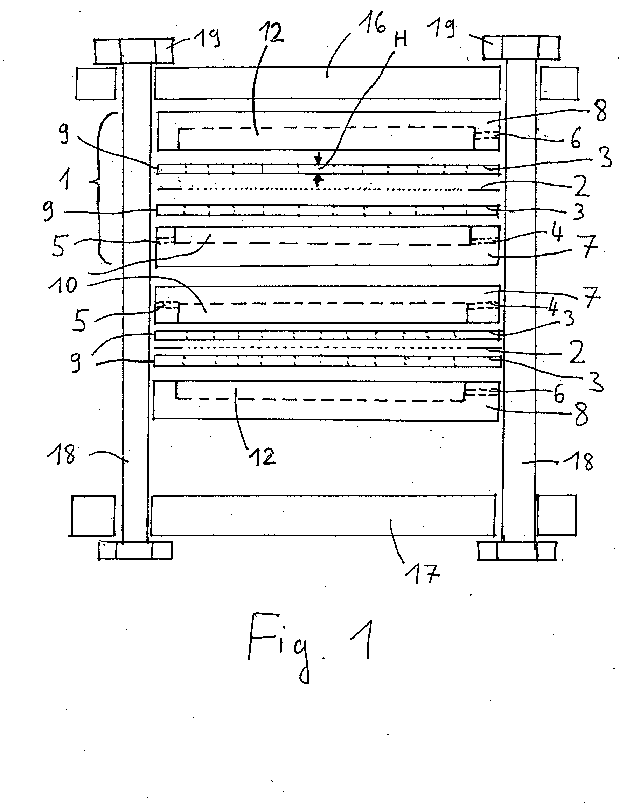

Figure 1 shows a schematic longitudinal section through a column of filter modules 1 to visualize the principles of applying a clamping force. All elements in fig. 1 are shown separately before they are pressed together with other similar modules (not shown in this figure) to form a jointly clamped column. Generally it is also possible to clamp a single filter module 1 in the same way. A filter module 1 according to this embodiment comprises a micro-sieve 2, sandwiched between two elastic contact layers 9 supported by a first support 7 and a second support 8. The contact layers 9 have a thickness H of more than 0.01 mm, in particular more than 0.03 mm, preferably approximately 0.1 mm, and elastic contact surfaces 3, which have to be smooth and clean, e.g. free of particles, for not destroying the micro-sieve 2 when pressed together. In this preferred embodiment a fluid can enter from the side into an entrance opening 4, which is connected to fluid guiding means 10, in particular a channel system, which distributes the fluid and guides it along the micro-sieve 2 as generally known in the prior art. If the system is to be used as a cross flow filter, the fluid is mainly guided along the micro-sieve 2 to a first exit opening 5, where the unfiltered fluid (retentate) is released. A part of the fluid passes the micro-sieve 2 and is collected by fluid collecting means 12 in the second support 8. From there the filtered fluid (permeate) is guided to a second exit opening 6. In case of dead end filtration the first exit opening 5 does not exist or can be used as second entrance opening for better distributing the fluid. The whole stack of filter modules 1 is hold together by an upper holding plate 16 and a lower holding plate 17, which are interconnected by interconnecting means 18, in particular bolts and nuts/screws 19 or the like. These interconnecting means 18, which should be at least thiee, in combination with the holding plates allow a uniform distribution of clamping force over the area of each filter module 1. There are many possibilities to design the channeling system in the whole column and the interconnections between the filter modules 1, which can be integrated in the supports or can be made by external connectors. It is also possible to place the interconnecting means 18 within the supports 7, 8 instead outside as shown in fig.1.

It should be noted that the elastic layers 9 in other embodiments (not shown in Fig.1) could be a coating or integral part of composite supports. In this case the column would contain less separate parts, but the clamping principle would remain the same.

The filter modules 1 or a column of filter modules 1 should be assembled under clean conditions, for example in a clean room according to US federal standard 2 09E class 1.000 so as to prevent particles being clamped between the micro-sieve 2 and the contact surface 16, respectively second contact surface 10. In this way the micro-sieve 2 does not need to be glued to the supports 7, 8 and may be replaced without replacing the supports 7, 8. In this way costs for replacing the supports 7, 8 are saved.

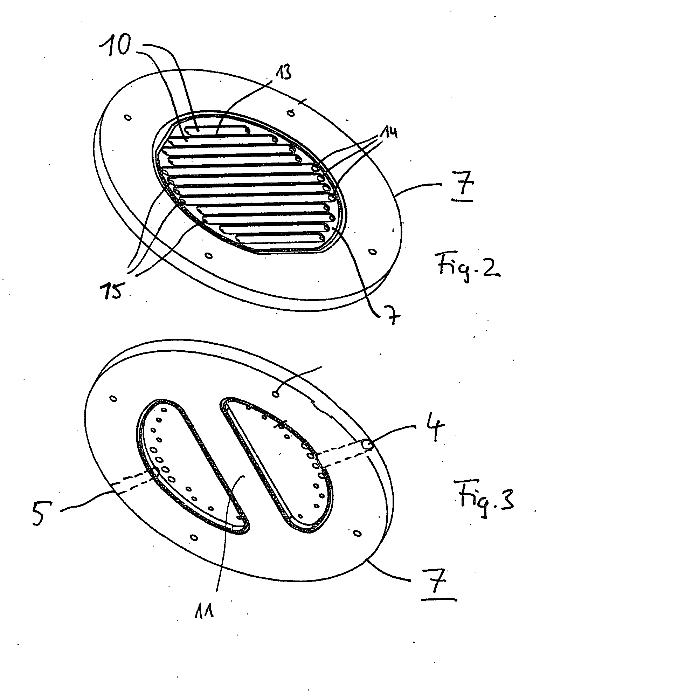

Figures 2 and 3 shows perspective views from above and below respectively of a first support 7 designed mainly for cross flow operation with ribs 13 spaced apart from each other in a distance X and forming channels 12, which allow a fluid flow from an entrance opening 4 through entrance bores 14, the channels 12 as fluid guiding means, and exit bores 15 to a first exit opening 5. In this way the micro-sieve can be used for cross flow filtration. From below a reinforcement structure 11 stabilizes the support 7. The bores 14, 15 can have different diameters depending on the lengths and/or cross sections of the channels 12 to be fed through the bores 14, 15.

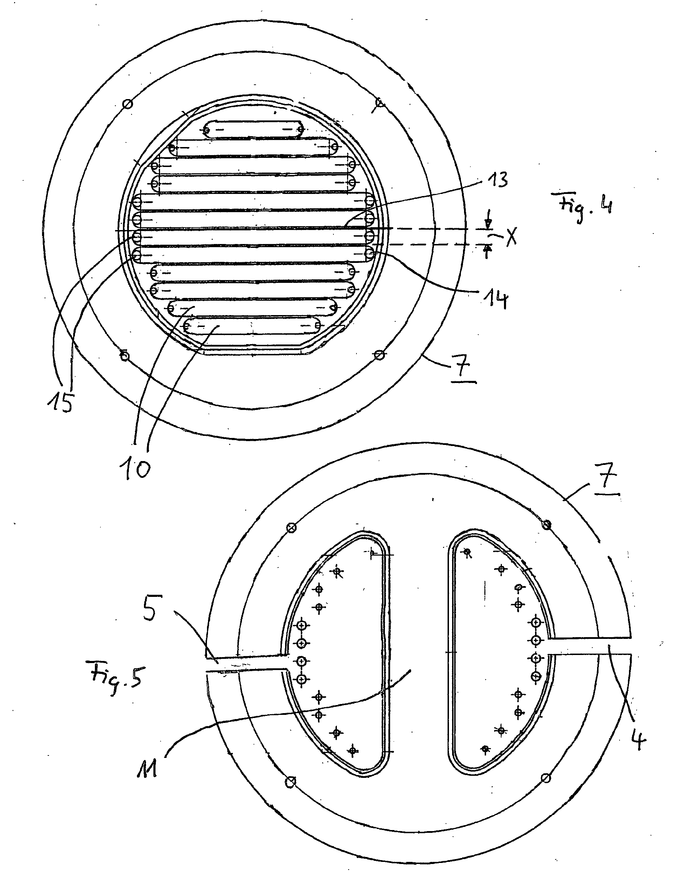

Figure 4 and 5 show the same first support 7 in top view and bottom view respectively. If necessary and depending on the materials used for the supports 7, 8 and the elastic planar surfaces 3, additional (not shown) sealing means, such as O-rings, may be used in a conventional way to seal the parts against each other. Most of the known principles how to design the flow channels and to arrange the feeding systems can be used in combination with the present invention, which allows use of micro filters on a technical scale.

### Reference numerals

- 1: filter module
- 2: micro-sieve
- 3: elastic planar surface
- 4: entrance opening
- 5: first exit opening
- 6: second exit opening
- 7: first support
- 8: second support
- 9: elastic layer
- 10: fluid guiding means, channels
- 11: reinforcement structures
- 12: fluid collecting means
- 13: supporting ribs
- 14: entrance bores
- 15: exit bores
- 16: upper holding plate
- 17: lower holding plate
- 18: interconnecting means
- 19: screw/nut

- H: thickness of contact layer 9
- X: distance between supporting ribs 13

## Claims

1. Filter module (1) for micro-filtration of fluids, in particular for micro-filtration of liquids,
comprising a micro-sieve (2), a first support (7) for supporting the micro-sieve (2) and guiding the fluid to the micro-sieve (2), and a second support (8) for covering the micro-sieve (2) and for collecting the fluid after having passed the micro-sieve (2),
wherein the micro-sieve (2) is sandwiched between the first (7) and the second (8) support so as to establish fluid conducting connections between the three parts (2, 7, 8) and to seal them against loss of fluid,
wherein the micro-sieve (2) is detachably hold between the first (7) and second (8) support only by a clamping force.

2. Filter module (1) according to claim 1, wherein the first (7) and/or the second (8) support comprises an elastic planar contact surface (3).

3. Filter module (1) according to claim 2, **characterized in that** the contact surface (3) is the surface of an intermediate elastic contact layer (9).

4. Filter module (1) according to claim 2 or 3, **characterized in that** the contact surface (3) is made of plastics.

5. Filter module according to claim 2 or 3, **characterized in that** the contact surface (3) is made of rubber, preferably a coating of molded rubber.

6. Filter module (1) according to one of the preceding claims, **characterized in that** the first (7) and/or the second (8) support are made of stainless steel.

7. Filter module (1) according to one of the preceding claims, **characterized in that** the first (7) and/or the second (8) support are made of plastics.

8. Filter module (1) according to one of the preceding claims, **characterized in that** the first (7) and/or second support (8) is a compound of reinforcement structures (11), preferably made of metal, in particular of stainless steel, and an elastic material at least partially covering said reinforcement structures (11) to form an elastic contact surface (3).

9. Filter module (1) according to one of the preceding claims, **characterized in that** the first (7) and/or second (8) support comprises a multiplicity of supporting ribs (13), that are arranged in spaced relationship with distances (X) smaller than 15 mm, in particular smaller than 12 mm, preferably smaller than 9 mm.

10. Filter module (1) according to one of the preceding claims, **characterized in that** the first support (7) comprises fluid guiding means (10), preferably with bores (14, 15) of a diameter being smaller than 18 mm, in particular smaller than 15 mm, most preferably smaller than 12 mm.

11. Filter module (1) according to one of the preceding claims, **characterized in that** the elastic planar contact layer (9) has a thickness (H) of more than 0.01 mm, in particular more than 0.03 mm, and the first (7) and/or second (8) support being made at least partially from metal, in particular from steel.

12. Filter module (1) according to one of the preceding claims, **characterized in that** the elastic planar contact surface (3) is made of an elastic material, in particular a polymer having a compressibility of less than 70·10⁹N/m², in particular less than 20·10⁹N/m², preferably less than 10·10⁹N/m².

13. Filter module (1) according to claim 1 or 2, **characterized in that** the second support (8) is provided to be symmetrical to the first support (7) including their respective contact surfaces (3).

14. Filter module (1) according to one of the preceding claims, **characterized in that** the first support (7) contains means (10) for guiding the fluid along and in contact with the micro-sieve (2) from at least one entrance (4) to at least one first exit (5) so as to establish a cross flow filtration situation.

15. Filter module (1) according to one of claims 1 to 13, **characterized in that** the first support (7) contains means (10) for guiding the fluid from at least one entrance (4) to the micro-sieve (2) so as to establish a dead end filtration situation.

16. Filter module (1) according to one of the preceding claims, **characterized in that** the second support (8) contains means (12) for collecting the fluid having passed the micro-sieve (2) and for guiding it to at least one second exit (6).

17. Filter module (1) according to one of the preceding claims, **characterized in that** the first (7) and the second (8) support are interconnected by interconnection means (18, 19), preferably by screws and nuts or the like, to provide the clamping force.

18. Filter module (1) according to one of the preceding claims, **characterized in that** the filter module (1) is one of a plurality of similar modules arranged in a column and connected in parallel concerning their fluid flows.

19. Filter module (1) according to one of the preceding claims, **characterized in that** it is, preferably together with similar modules in a column, arranged between an upper (16) and a lower (17) holding and force distributing plate, which are interconnected by interconnection means (18, 19) to provide the clamping force to hold the filter module(s) (1) together.

20. Method for assembling a filter module (1) for micro-filtration of fluids, in particular for micro-filtration of liquids,
comprising a micro-sieve (2), a first support (7) for supporting the micro-sieve (2) and guiding the fluid to the micro-sieve (2), and a second support (8) for covering the micro-sieve (2) and for collecting the fluid after having passed the micro-sieve (2),
wherein the micro-sieve (2) is sandwiched between the first and the second support so as to establish fluid conducting connections between the three parts and to seal the system against loss of fluid,
wherein the micro-sieve (2) is detachably hold between the first and second support only by applying a clamping force,
and wherein the assembling takes place under clean conditions, preferably in a clean room, to avoid foreign particles between the contact surfaces of the micro-sieve (2) and the first (7) and second (8) support.
